# EUROPÄISCHE PATENTANMELDUNG

(11) **EP 1 369 758 A1**
(43) Veröffentlichungstag der Anmeldung: **10.12.2003**
(21) Anmeldenummer: 02012701.5
(22) Anmeldetag: 07.06.2002
(51) Int. Cl.: G05B 19/4097

(54) **System mit einer computergestützten Konstruktionsvorrichtung und einer computergestützten Fertigungsvorbereitungsvorrichtung**

(71) Anmelder: Haberstock, Rolf, D-79790 Küssaberg (DE)
(72) Erfinder: Haberstock, Rolf, D-79790 Küssaberg (DE)
(74) Vertreter: EGLI-EUROPEAN PATENT ATTORNEYS

(57) **Zusammenfassung**

Es wird ein System (100) zur Konstruktion und Herstellungsvorbereitung von durch mehrere Bearbeitungsvorgänge in verschiedenen, numerisch gesteuerten Bearbeitungsmaschinen (NC-Maschinen 80, 82, 84) zu bearbeitenden Werkstücken vorgeschlagen. Das System umfasst eine computerunterstützte Konstruktionsanlage (CAD-Anlage 50) und eine computerunterstützte Fertigungsanlage (CAM-Anlage 60). Mit Hilfe einer Schnittstelle (70), vorzugsweise mit einer systemeigenen Schnittstelle der CAD-Anlage (50), werden die Konstruktionsdaten einschliesslich Lageangaben, Massangaben, Toleranzdaten, Materialdaten von der CAD-Anlage (50) an die CAM Anlage (60) weitergegeben. Die CAM-Anlage (60) ist so eingerichtet ist, dass mit Hilfe der Konstruktionsdaten die Werkzeuge für die Bearbeitungsvorgänge und die Daten für die einzelnen numerisch gesteuerten Bearbeitungsmaschinen (80, 82, 84) festgelegt werden können. Durch eine mit der CAM-Anlage (60) in Verbindung stehende Datenbank (65) werden aus den genannten Konstruktionsdaten die Angaben zur Auswahl der Werkzeuge für die Bearbeitungsvorgänge und die Daten für die einzelnen numerisch gesteuerten Bearbeitungsmaschinen (80, 82, 84) festgelegt.

## Beschreibung

Die vorliegende Erfindung betrifft ein System, das aus zumindest einer computerunterstützten Konstruktionsvorrichtung (CAD) und einer computerunterstützten Produktionsvorrichtung (CAM) besteht. Speziell betrifft die Erfindung ein solches System, bei dem die Konstruktionsdaten aus der CAD-Vorrichtung an eine CAM-Vorrichtung weitergegeben werden, nachdem die Konstruktionsvorgänge abgeschlossen sind oder bei dem für die bereits bekannten, fertigungsrelevanten Daten aus einer entsprechenden Datenbank den Konstruktionsdaten (CAD-Daten) entsprechende Fertigungshinweise hinzugefügt werden.

Die computerunterstützte Konstruktion (CAD) von herzustellenden Produkten ist seit langem bekannt. Zur Durchführung gibt es eine ganze Reihe von Konstruktionsprogrammen (z.B. AUTOCAD, HP ME10, CATIA, Intergraph, SolidWorks, Pro/Engineer). Bei den beiden letztgenannten handelt es sich um volumenorientierte CAD-Systeme, die im Gegensatz zu den früheren, zweidimensionalen Systemen, z.B. die beiden erstgenannten Systeme stehen. Bei einem solchen Entwicklungsprozess werden üblicherweise Konstruktionszeichnungen und -vorlagen erstellt, die dann in einem späteren Prozess, z.B. dem Herstellungsprozess verwendet werden. Die erstellten Konstruktionen werden aber nicht nur als Konstruktionszeichnungen z.B. auf einem Zeichengerät des Computers ausgegeben (_{"}geplottet"), sondern auch als Datei auf einem Datenträger des Computers gespeichert. Es hat sich dabei als wichtig herausgestellt, dass die Dateiformate, in denen die Konstruktionsdaten abgespeichert werden, nicht nur das Produkt des Konstruktionsvorganges enthalten, sondern auch umfangreiche Daten über die Struktur der Datenentstehung. Weiterhin ist es selbstverständlich wichtig, dass die ausgetauschten Daten nicht auf bestimmte Konstruktionsprogramme beschränkt sind, sondern es Schnittstellen gibt, mit denen solche Daten auch zwischen einzelnen Konstruktionsprozessen verschiedener Programmanbieter ausgetauscht werden können. Um diese Aufgabe zu lösen, wurde eine grosse Zahl von Datenschnittstellen definiert, von denen mit DXF, CATIA, IGES, STEP, STL, SAT nur einige beispielhaft aufgezählt werden sollen. Dabei haben die bekannten, genormten Schnittstellen zur Zeit den Nachteil, dass wichtige parametrisierte Informationen für eine schnelle und optimale Bearbeitung für andere Bereiche wie Berechnungen, Simulationen, CAM u.a. nicht oder nur mangelhaft übertragen werden können.

Diese Schnittstellen dienen auch als Übergabemittel an eine Vorrichtung zur Unterstützung des Produktionsprozesses (CAM). Mit dieser Vorrichtung werden üblicherweise die eigentlichen Bearbeitungsprozesse festgelegt. Die Daten der CAM-Anlage werden dann z.B. als Programm an die computergesteuerte Bearbeitungsmaschine (NC-Maschine) weitergegeben. Während in der CAD-Anlage das Produkt im Vordergrund steht und die Herstellvorgänge dieses Produktes allenfalls als Hintergrundinformation dient, werden in der CAM-Anlage dann die einzelnen Bearbeitungsvorgänge festgelegt. Es liegt in der Natur der Sache, dass sich hier wesentliche Unterschiede ergeben. Diese sollen im folgenden an einem Beispiel, nämlich bei den Toleranzen, erläutert werden.

Wenn in einem Werkstück ein Passstift eingelassen werden soll, so wird in der CAD-Anlage ein bestimmtes Loch definiert. Die Definition umfasst dabei z.B. die Lage (Position und Winkel), die Plattendicke (Tiefe) und das Innenmass. In der CAM-Anlage werden dann die Bearbeitungsdaten für dieses Loch festgelegt. Grundsätzlich kann das Loch gebohrt, gefräst, drahterodiert oder auch auf andere Arten erzeugt werden, wobei jeder dieser Vorgänge bestimmte Untervorgänge umfassen kann. Bei der Konstruktion des Produktes werden allenfalls bestimmte Toleranzen festgelegt, die das Loch haben soll. Normen über die Form, Lage- und Masstoleranzen sind dabei seit langem in der Anwendung. Solche Daten werden entweder vom Benutzer in der CAD-Anlage festgelegt oder aus bestimmten vorgegebenen Datenbanken entnommen. An dieser Stelle sei auf Normbibliotheken verschiedener CAD-Systeme oder auf die Lösung mit der Datenbank GeniusWorks der Firma Dynabits hingewiesen. Wenn nun diese Daten von der CAD-Anlage an die CAM-Anlage weitergegeben werden, so wird dort - entsprechend dem Stand der Technik ein bestimmter Prozess zur Bearbeitung ausgewählt, im vorliegenden Beispiel entweder Bohren mit anschliessendem Reiben oder Drahterodieren. Gemäss dem Stand der Technik wurde bisher der Bearbeitungsvorgang durch Benutzereingabe - typischerweise in einer CAM-Anlage - festgelegt, während die Auswahl des Werkzeuges entweder ebenfalls - z.B. in der CAM-Anlage - manuell oder bei der Programmierung der numerischen Steuerung (NC-Maschine) festgelegt wurde. Ausserdem ist die Anwendung von sogenannten Makros mit fest in die Maschinensteuerung eingebauten Fertigungszyklen, zum Teil mit einzugebenden Parametern üblich. Dieser Vorgang wird in sogenannten Preprozessoren (PRP) durchgeführt, wobei die Ausgabe der Daten aus der CAM-Anlage in einer abstrakten Sprache (z.B. TCL oder CL DATA) erfolgt und diese Daten (z.B. TCL-Anweisungen) dann in einem Postprozessor (PP) in NC-Steuerungsanweisungen umgesetzt werden.

Nachteilig ist bei der vorstehend beschriebenen Vorgehensweise, dass bei einem neu zu erstellenden NC-Programm die Auswahl der Werkzeuge und deren Sequenz jedes mal wieder eingegeben werden muss - eben üblicherweise manuell in die CAM-Anlage oder auch in den Preprozessor für die ausgewählte NC-Bearbeitungsanlage. Im günstigsten Fall können Gruppen zusammengefasst werden. Bei einer Verwendung von Makros ist eine Berechnung der NC-Prozesse in der CAM-Anlage nicht möglich, da die Werkzeuge und Parameter nicht vollständig bekannt sind. Dies ist ein grosser Nachteil beim Stand der Technik. Damit kann Kollisionsfreiheit und die Bestimmung optimaler Parameter nicht gewährleistet werden.

Es ist also zunächst einmal die Aufgabe der Erfindung, ein System vorzuschlagen, mit dem die genannte Verarbeitungslücke zwischen den Konstruktionsdaten der CAD-Einrichtung und der Festlegung des Bearbeitungsprozesses geschlossen werden kann. Dabei sollen während des CAM-Prozesses möglichst keine benutzergewählten Festlegungen nötig sein.

Die Erfindung löst die Aufgabe durch eine Vorrichtung nach Anspruch 1. Dabei haben die Massnahmen der Erfindung zunächst einmal zur Folge, dass die vorzugsweise bereits mit Toleranzangaben versehenen Konstruktionsdaten in der CAM-Anlage mit Hilfe der zur Erfindung gehörenden Datenbanken mit Produktionsart- und Werkzeugdaten versehen werden, die dann Teil des Konstruktionsmerkmals (z.B. Loch) sind. Dieser Vorgang wird - in Abhängigkeit von den Daten - entweder vollständig automatisch durchgeführt, weil z.B. nur eine Bearbeitungsart für das vorliegende Konstruktionsmerkmal in Frage kommt oder weil in der besagten Datenbank oder in den Konstruktionsdaten eine Vorrangliste für einzelne Bearbeitungsvorgänge vorliegt, oder aber dem Benutzer wird die Entscheidung zwischen zwei oder mehreren Bearbeitungsarten ermöglicht, sei es weil er dies wünscht oder sei es, dass für diesen Einzelfall eben noch keine Vorrangliste vorliegt. Im Sinne einer Anlage mit künstlicher Intelligenz wird dann ermöglicht, dass die so getroffene Entscheidung für dieses Werkstück oder ganz allgemein als Vorrang in der Datenbank abgelegt wird.

Vorzugsweise werden die festgelegten Bearbeitungsarten für die einzelnen Konstruktionsmerkmale den Daten aus der CAD-Anlage hinzugefügt. Dies hat den besonderen Vorteil, dass bei einer allfälligen Änderung der Konstruktion aus welchen Gründen auch immer die Informationen über die Bearbeitungsarten erhalten bleiben und somit nach der Konstruktionsänderung für die Vorgänge wiederverwendet werden können, die sich in Bezug auf die bearbeitungsrelevanten Daten (z.B. Lagedaten, Massdaten und Toleranzdaten) nicht geändert haben.

Weitere vorteilhafte Einzelheiten der Erfindung sind in den abhängigen Ansprüchen dargelegt, von denen einzelne wiederum einen eigenen erfinderischen Beitrag über die hier beschriebene, grundsätzliche Erfindung haben.

Die vorgenannten sowie die beanspruchten und in den nachfolgenden Ausführungsbeispielen beschriebenen, erfindungsgemäss zu verwendenden Elemente unterliegen in ihrer Grösse, Formgestaltung, Materialverwendung und technischen Konzeption keinen besonderen Ausnahmebedingungen, so dass die in dem jeweiligen Anwendungsgebiet bekannten Auswahlkriterien uneingeschränkt Anwendung finden können.

Weitere Einzelheiten, Merkmale und Vorteile des Gegenstandes der Erfindung ergeben sich aus der nachfolgenden Beschreibung der dazugehörigen Zeichnungen, in denen - beispielhaft - ein System gemäss der vorliegenden Erfindung erläutert wird.

In den Zeichnungen zeigen:
- Figur 1: ein Blockdiagramm zu einem System gemäss der vorliegenden Erfindung;

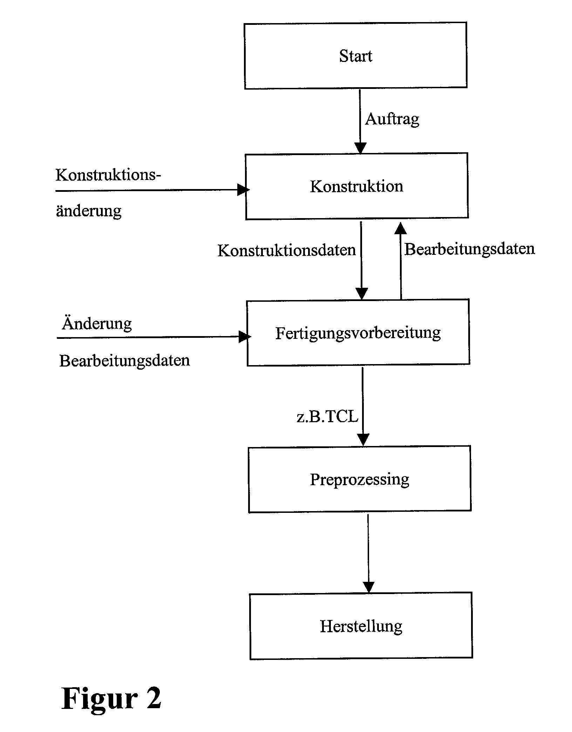

- Figur 2: ein Blockdiagramm zu einem Verfahren gemäss der vorliegenden Erfindung.

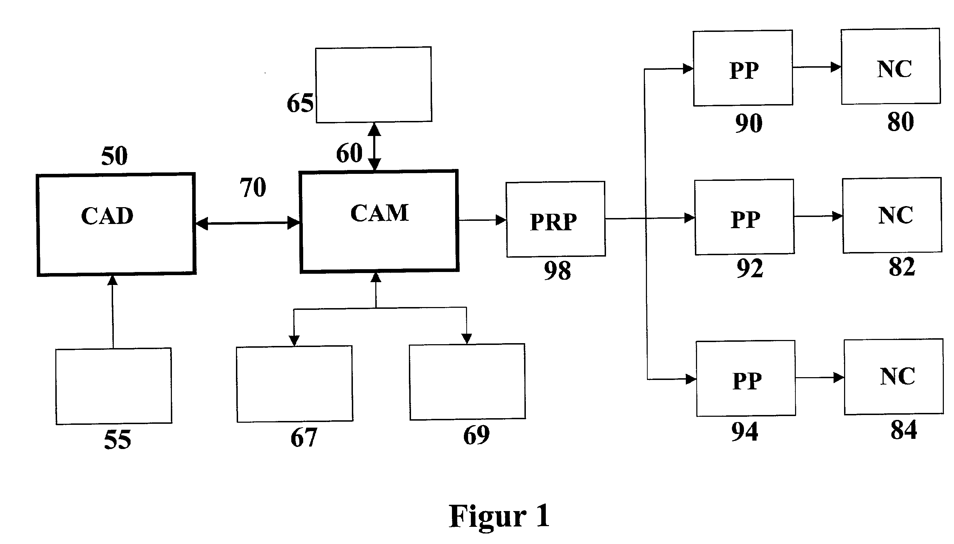

Zu dem in Figur 1 als Ganzes mit 100 bezeichneten System gehört eine computerunterstützte Konstruktionsanlage (CAD-Anlage) 50 und eine computerunterstützte Fertigungsanlage (CAM-Anlage) 60. In der CAD-Anlage 50 werden in üblicher Weise Konstruktionen erstellt und zwar mit einem volumenorientierten CAD-Programm gemäss dem Stand der Technik, im vorliegenden Fall ein CAD-Programm "SolidWorks". Dieses Programm ist mit einer Konstruktionsdatenbank 55 unterstützt, in der Standarddaten für die Konstruktion enthalten sind.

Nach dem Ende des herkömmlichen Konstruktionsvorganges werden die Daten mit Hilfe einer Schnittstelle gemäss dem Stand der Technik, im vorliegenden Beispiel einer Schnittstelle nach der IGES-Norm oder STEP an die computerunterstützte Fertigungsanlage (CAM-Anlage) 60 weitergegeben. Hier werden - wie im Stand der Technik üblich - Fertigungsvorbereitungsvorgänge durchgeführt, nämlich die Aufbereitung von Daten für die nachfolgenden NC-Steuerungsanlagen 80, 82 und 84. Die Eingangsdaten der CAM-Anlage 60 umfassen die Mass- und Lagedaten und vorzugsweise auch schon Material- und Toleranzdaten. Diese Daten werden im hier beschriebenen Vorgang als die wesentlichen Konstruktionsdaten angesehen. Sollten für bestimmte Vorgänge einmal keine Material- und Toleranzdaten vorliegen, können sie in der CAD-Anlage 50 oder aber auch in der CAM-Anlage 60 hinzugefügt werden. Dies wird aber im Sinne der hier vorliegenden Erfindung noch dem Konstruktionsprozess zugeordnet angesehen.

In der CAM-Anlage wird nun mit Hilfe der Datenbank 65 eine Berechnung durchgeführt, in der alle Prozesse, die aus den Konstruktionsmerkmalen notwendig werden, bezüglich der Mass-, Lage-, Material- und Toleranzdaten möglichen Bearbeitungsvorgängen zugeordnet werden. Dies können für einzelne Konstruktionsdetails, wie z.B. ein Loch zur Aufnahme eines Passstiftes, verschiedene Bearbeitungsvorgänge sein, oder aber auch nur ein einzelner. Im vorliegenden Beispiel eines Loches mit sehr engen Toleranzangaben kommt z.B. nicht in Frage, das Loch in einem Vorgang zu bohren. Möglich ist aber ein Bohren mit anschliessendem Reiben, wegen der engen Toleranz, oder aber ein Drahterodieren oder Schleifen.

Im vorliegenden Ausführungsbeispiel werden die Daten bezüglich der Verarbeitungsvorgänge nicht aus einer einzelnen Datenbank entnommen. Es liegen - aus Wartungsgründen für die unterschiedlichen Daten - vielmehr mehrere Datenbanken vor, die im einzelnen eine allgemeine Technologiebibliothek mit den für die Verarbeitung in den anschliessenden NC-Maschinen 80, 82 und 84 etc. möglichen Technologien und ihren Merkmalen (Features), eine Bibliothek für die Toleranzen, eine Bibliothek für die Oberflächenqualität, eine Materialbibliothek (z.B. mit den möglichen Schrittgeschwindigkeiten für ein bestimmtes Material beim Fräsen), und eine Werkzeugbibliothek (z.B. mit den Angaben für den richtigen Vorschub, Zustellung pro Zahn). In Figur 1 sind diese einzelnen Bibliotheken in Block 65 zusammengefasst. Im vorliegenden Ausführungsbeispiel - und dies ist besonders vorteilhaft - wird neben den mit den Features der CAD-Anlage 50 versorgten Daten eine Datenbank für die Werkzeuge, eine Datenbank für die Fertigungsfeatures, eine Datenbank für die Materialien, eine Datenbank mit ablauforientiertem Wissen und eine Datenbank mit den Kombinationsregeln verwendet.

Im vorgenannten Beispiel werden als Ergebnis der Datenbankanfrage zwei Bearbeitungsarten (Bohren mit anschliessendem Reiben und Drahterodieren) als möglich angesehen. Es liegt weiterhin eine Vorrangdatenbank 67 vor, die aus jeweils mehreren möglichen Bearbeitungsarten eine auswählt. Diese Auswahl geschieht im hier vorliegenden Beispiel statisch, das heisst, dass jeweils eine Bearbeitungsart als vorrangig zu den anderen bzw. verbleibenden Bearbeitungsarten angesehen wird. Die entsprechende Vorrangdatenbank 67 wird im nachfolgenden als individuelle Vorrangdatenbank bezeichnet. Als Alternative ist vorgesehen, dass die Entscheidung über die Auswahl aus mehreren Bearbeitungsarten dem Benutzer der CAM-Anlage vorgelegt wird, der die Entscheidung dann auf Grund seiner Erfahrung trifft. Da dies aber dem automatischen Ablauf der Fertigungsvorbereitung nicht vollumfänglich entspricht, ist diese Alternative nur auf ausdrücklichen Befehl des Benutzers vorgesehen. Weiterhin ist - im vorliegenden Ausführungsbeispiel als alternative Lösung - vorgesehen, dass der Auswahlprozess zweistufig abläuft. Dabei werden zunächst einmal alle möglichen Bearbeitungsarten für die einzelnen Konstruktionsmerkmale (z.B. Löcher) - wiederum unter Verwendung der bereits genannten Datenbank - gesammelt. Aus einer weiteren Datenbank, die ebenfalls als - alternative - Vorrangdatenbank 69 funktioniert, werden hernach nach kollektiven Kriterien die Auswahlentscheidungen für die möglichen Bearbeitungsarten ausgewählt. Die alternative Vorrangdatenbank 69 kann - je nach Verfügung der einzelnen Bearbeitungsmaschinen - z.B. festlegen, dass möglichst viele Vorgänge nach derselben Bearbeitungsart durchgeführt werden. Wenn aber für jede Bearbeitungsart - im vorliegenden Ausführungsbeispiel Bohren mit anschliessendem Reiben oder Drahterodieren - die Bearbeitungsmaschinen zur Verfügung stehen und eine gleichmässige Auslastung angestrebt wird, dann kann auch zuvor festgelegt werden, dass die entsprechenden Bearbeitungsvorgänge auf diese beiden Bearbeitungsarten aufgeteilt werden.

Es liegt auf der Hand, dass zumindest eine Bearbeitungsart aus der Berechnung mit Hilfe der Datenbank 65 als möglich angesehen werden muss, da sonst die Konstruktion mit den hier aufgezeigten Daten schlichtweg fehlerhaft wäre.

Nach Abschluss der Festlegungsarbeit werden die Auswahldaten den Konstruktionsdaten und -merkmalen hinzugefügt und an die einzelnen Fertigungsmaschinen (NC-Maschinen) oder - im vorliegenden Ausführungsbeispiel gemäss Figur 1 - an die Postprozessoren 90, 92, 94 für die NC-Maschinen weitergereicht. Die Übergabe an die Postprozessoren 90, 92, 94 erfolgt beispielsweise im bekannten Format der abstrakten TCL-Sprache oder als CL-Data über einen Preprozessor 98. Dort werden dann die einzelnen Prozessschritte im Detail in Steuerungsbefehle der unterschiedlichen NC-Anlagen umgesetzt, wobei nach dem Stand der Technik vorgegangen werden kann. Es sollte betont werden, dass die Bezeichnung NC-Anlage alle gesteuerten Bearbeitungsmaschinen umfassen soll, die mit der dargestellten Technik erreichbar sind. Zusätzlich werden aber die Daten zur Festlegung der möglichen Bearbeitungsarten den Konstruktionsdaten hinzugefügt und stehen anschliessend auch in der CAD-Anlage zur Verfügung. Dies ist für nachfolgende Nachbearbeitungen wesentlich, da der - meist in der Fertigungstechnik nicht allzu erfahrene - Konstrukteur dann die kritischen Daten bis hin zu den Fällen, in denen keine Bearbeitungsart auswählbar war, bei Änderungen der Konstruktion die Daten der Fertigungsvorbereitung mit berücksichtigen kann. Ausserdem muss die Auswahl für die jeweilige Bearbeitungsart für die nicht veränderten Konstruktionsmerkmale nicht nochmals durchgeführt werden, was eine wesentlich Ersparnis bedeuten kann. Um die Entscheidung treffen zu können, ob eine Auswahl der Bearbeitungsart nochmals durchgeführt werden muss, werden im vorliegenden Ausführungsbeispiel diejenigen Auswahldaten in der CAD-Anlage 50 als nicht mehr gültig markiert, deren Konstruktionsdaten sich verändert haben. Als Alternative - für den Fall, dass eine CAD-Anlage 50 verwendet wird, die dieses Programmmerkmal nicht aufweist - ist vorgesehen, in der CAM-Anlage 60 eine Konfigurationskontrolle durchzuführen, um dort die Änderungen in der Konstruktion nach einer Auswahl der Bearbeitungsarten nachvollziehen zu können und den Auswahlprozess für diese Konstruktionsmerkmale wiederholen zu können.

Im vorliegenden Ausführungsbeispiel ist vorgesehen, dass dem Austausch zwischen der CAD-Anlage 50 und der CAM-Anlage 60 alle möglichen Bearbeitungsarten unterliegen sollen, dass also die Verwendung der individuellen oder der kollektiven Vorrangdatenbank jedes Mal durchgeführt wird, wenn die Daten von der CAD-Anlage 50 an die CAM-Anlage 60 transferiert werden. Alternativ ist aber vorgesehen, dass - zumindest beim Einsatz einer individuellen Vorrangdatenbank auf Anforderung des Benutzers die Auswahlentscheidungen der letzten Durchläufe verwendet werden, um so Rechenvorgänge einzusparen. In diesem Fall werden nur für die geänderten Konstruktionsmerkmale Bearbeitungsarten durch die Vorrangdatenbank ausgewählt, soweit verschiedene Bearbeitungsarten für die Konstruktionsmerkmale als geeignet durch die Ergebnisse der Datenbank 65 angesehen wurden.

Es wird dem Fachmann anhand des Vorstehenden klar sein, dass eine geschilderte Ablaufvereinfachung nicht möglich ist, wenn - wie z.B. nach dem Stand der Technik üblich - die Bearbeitungsdaten in den Preprozessoren hinzugefügt werden, sei es nun manuell oder auch aus einer Datenbank, da dann das Zurückführen in die der CAD-Anlage zur Verfügung stehenden Konstruktionsdaten nur schlecht möglich, keinesfalls aber sinnvoll ist.

Weiterhin wird dem Fachmann klar sein, dass die hier beschriebenen Bearbeitungsvorgänge selbst eher beispielhaft dargestellt sind und dass die Auswahl eines Loches den Zweck hatte, den Ablauf möglichst einfach darstellen zu können, auch wenn die Vorteile der Erfindung sich deutlicher einstellen werden, wenn die Bearbeitungsvorgänge komplizierter sind (wie z.B. mehrachsigem Freiformflächenfräsen nach WO-A-98/16340), da dann z.B. die Merkmale für Oberflächenqualität bei der Auswahl eines bestimmten Prozesses wesentlich werden.

Die Auswahl eines Vorganges - im Beispiel Bohren mit anschliessendem Reiben alternativ zu Drahterodieren oder Schleifen - ist selbstverständlich nicht auf derart grundsätzlich unterschiedliche Verarbeitungsvorgänge beschränkt, sondern kann sich auch auf verschiedene Maschinentypen für Vorgänge beziehen, die eher den gleichen Namen haben, wenn diese Maschinentypen unterschiedliche Verarbeitungsmerkmale aufweisen (schnelle Maschine/langsame Maschine, genaue Maschine/weniger genaue Maschine, etc.). Insbesondere sind die Massnahmen der Erfindung sowohl für abtragende wie auch für aufbauende Bearbeitungssysteme und -verfahren (z.B. Stereolithographie, Auftragsschweissen, Giessharzauftrag, Laminarauftrag und ähnliches) einsetzbar.

Es muss betont werden, dass das erfinderische und im voranstehenden als Ausführungsbeispiel erläuterte Verfahren und das damit verbundene System auch dann wirksam eingesetzt werden kann, wenn die bereits bekannten, fertigungsrelevanten Daten aus einer entsprechenden Datenbank den Konstruktionsdaten (CAD-Daten) bereits im CAD-System als entsprechende Fertigungshinweise hinzugefügt werden.

## Patentansprüche

1. System zur Konstruktion und Herstellungsvorbereitung von durch mehrere Bearbeitungsvorgänge in verschiedenen, numerisch gesteuerten Bearbeitungsmaschinen (NC-Maschinen 80, 82, 84) zu bearbeitenden Werkstücken, insbesondere von Werkstücken, die mit einem oder mehreren der Vorgänge Bohren, Bohren mit Vorbohren und Fertigbohren, Bohren mit anschliessendem Reiben, Schleifen, Fräsen, Drahterodieren, Senkerodieren, mechanischem Sägen, Bearbeitung mit Wasserstrahl, Bearbeitung mit Laserstrahlen und aufbauenden Techniken bearbeitet werden sollen, mit
- einer computerunterstützten Konstruktionsanlage (CAD-Anlage 50) und
- einer computerunterstützten Fertigungsanlage (CAM-Anlage 60) ,
wobei die CAD-Anlage (50) so eingerichtet ist, dass Konstruktionsdaten (Features) erstellt oder bereits erstellte Konstruktionsdaten verändert werden können,
wobei die CAD-Anlage (50) und die CAM-Anlage (60) so eingerichtet sind, dass mit Hilfe einer Schnittstelle (70), vorzugsweise mit einer systemeigenen Schnittstelle der CAD-Anlage (50), die Konstruktionsdaten, insbesondere Lageangaben, Massangaben, Toleranzdaten und Materialdaten, von der CAD-Anlage (50) an die CAM Anlage (60) weitergegeben werden können,
wobei die CAM-Anlage (60) so eingerichtet ist, dass mit Hilfe der Konstruktionsdaten die Werkzeuge für die Bearbeitungsvorgänge und die Daten für die einzelnen numerisch gesteuerten Bearbeitungsmaschinen (80, 82, 84) festgelegt werden können,
**gekennzeichnet durch**
zumindest eine, mit der CAM-Anlage (60) in Verbindung stehenden Datenbank (65), in der Daten und/oder Algorithmen zugreifbar gespeichert sind, mit deren Hilfe aus den genannten Konstruktionsdaten die Angaben zur Auswahl der Werkzeuge für die Bearbeitungsvorgänge und die Daten für die einzelnen numerisch gesteuerten Bearbeitungsmaschinen (80, 82, 84) festgelegt werden können.

2. System nach Anspruch 1, **gekennzeichnet durch** eine mit der CAM-Anlage (60) in Verbindung stehenden Vorrangdatenbank (67, 69), wobei die CAM-Anlage (60) so eingerichtet ist, dass sie in dem Fall, dass eine bestimmte Bearbeitungsart für einen Bearbeitungsvorgang des Werkstückes möglich ist, diese Bearbeitungsart festlegt, für den Fall aber, dass mehr als eine Bearbeitungsart für einen Bearbeitungsvorgang des Werkstückes möglich ist, eine Entscheidung über die ausgewählte Bearbeitungsart mit Hilfe der Daten der Vorrangdatenbank (67, 69) vornimmt.

3. System nach Anspruch 2, **dadurch gekennzeichnet, dass** die Vorrangdatenbank (67) so eingerichtet ist, dass sie die Auswahl für jedes Konstruktionsmerkmal individuell treffen kann.

4. System nach Anspruch 2, **dadurch gekennzeichnet, dass** die Vorrangdatenbank (69) so eingerichtet ist, dass sie die Auswahl in Abhängigkeit von möglichen Bearbeitungsarten für mehrere Konstruktionsmerkmale treffen kann.

5. System nach einem der Ansprüche 2 bis 4, **dadurch gekennzeichnet, dass** die Angaben zur Auswahl der Werkzeuge für die Bearbeitungsvorgänge und die Daten für die einzelnen numerisch gesteuerten Bearbeitungsmaschinen (80, 82, 84) den Konstruktionsdaten hinzugefügt werden können und über die genannte Schnittstelle (70) oder eine weitere Schnittstelle zwischen der CAD-Anlage (50) und der CAM-Anlage (60) der CAD-Anlage (50) zur Verfügung gestellt werden können.

6. System nach Anspruch 5, **dadurch gekennzeichnet, dass** die CAM-Anlage (60) so eingerichtet ist, dass sie in dem Fall, dass eine bestimmte Bearbeitungsart für einen Bearbeitungsvorgang des Werkstückes bereits den Konstruktionsdaten hinzugefügt worden ist, diese Daten ohne Hilfe der Daten der Vorrangdatenbank (67) verwendet werden.

7. Verfahren zur Konstruktion und Herstellungsvorbereitung von durch mehrere Bearbeitungsvorgänge in verschiedenen, numerisch gesteuerten Bearbeitungsmaschinen (NC-Maschinen 80, 82, 84) zu bearbeitenden Werkstücken, insbesondere von Werkstücken, die mit einem oder mehreren der Vorgänge Bohren, Bohren mit Vorbohren und Fertigbohren, Bohren mit anschliessendem Reiben, Schleifen, Fräsen, Drahterodieren, Senkerodieren, mechanischem Sägen, Bearbeitung mit Wasserstrahl, Bearbeitung mit Laserstrahlen und aufbauenden Techniken bearbeitet werden sollen, mit Hilfe
- einer computerunterstützten Konstruktionsanlage (CAD-Anlage 50) und
- einer computerunterstützten Fertigungsanlage (CAM-Anlage 60) ,
wobei in der CAD-Anlage (50) Konstruktionsdaten erstellt oder bereits erstellte Konstruktionsdaten verändert werden,
wobei mit Hilfe einer Schnittstelle (70), vorzugsweise mit einer systemeigenen Schnittstelle der CAD-Anlage (50), die Konstruktionsdaten, insbesondere Lageangaben, Massangaben, Toleranzdaten und Materialdaten, von der CAD-Anlage an die CAM Anlage (60) weitergegeben werden,
wobei in der CAM-Anlage (60) mit Hilfe der Konstruktionsdaten die Werkzeuge für die Bearbeitungsvorgänge und die Daten für die einzelnen numerisch gesteuerten Bearbeitungsmaschinen (80, 82, 84) festgelegt werden,
**gekennzeichnet durch**
den Schritt, dass mit der mit der CAM-Anlage (60) in Verbindung stehenden Datenbank (65), in der Daten und/oder Algorithmen zugreifbar gespeichert sind aus den genannten Konstruktionsdaten die Angaben zur Auswahl der Werkzeuge für die Bearbeitungsvorgänge und die Daten für die einzelnen numerisch gesteuerten Bearbeitungsmaschinen (80, 82, 84) festgelegt werden.

8. Verfahren nach Anspruch 7, **dadurch gekennzeichnet, dass** mit einer mit der CAM-Anlage (60) in Verbindung stehenden Vorrangdatenbank (67, 69) in dem Fall, dass eine bestimmte Bearbeitungsart für einen Bearbeitungsvorgang des Werkstückes möglich ist, diese Bearbeitungsart festlegt wird, für den Fall aber, dass mehr als eine Bearbeitungsart für einen Bearbeitungsvorgang des Werkstückes möglich ist, eine Entscheidung über die ausgewählte Bearbeitungsart mit Hilfe der Daten der Vorrangdatenbank (67, 69) vorgenommen wird.

9. Verfahren nach Anspruch 8, **dadurch gekennzeichnet, dass** die Vorrangdatenbank (67) die Auswahl für jedes Konstruktionsmerkmal individuell trifft.

10. Verfahren nach Anspruch 8, **dadurch gekennzeichnet, dass** die Vorrangdatenbank (69) die Auswahl in Abhängigkeit von möglichen Bearbeitungsarten für mehrere Konstruktionsmerkmale trifft.

11. Verfahren nach einem der Ansprüche 8 bis 10, **dadurch gekennzeichnet, dass** die Angaben zur Auswahl der Werkzeuge für die Bearbeitungsvorgänge und die Daten für die einzelnen numerisch gesteuerten Bearbeitungsmaschinen (80, 82, 84) den Konstruktionsdaten hinzugefügt werden und über die genannte Schnittstelle oder eine weitere Schnittstelle (70) zwischen der CAD-Anlage (50) und der CAM-Anlage (60) der CAD-Anlage (50) zur Verfügung gestellt werden.

12. Verfahren nach Anspruch 11, **dadurch gekennzeichnet, dass** in dem Fall, dass eine bestimmte Bearbeitungsart für einen Bearbeitungsvorgang des Werkstückes bereits den Konstruktionsdaten hinzugefügt worden ist, diese Daten ohne Hilfe der Daten der Vorrangdatenbank (67) verwendet werden.

13. Computerunterstützte Fertigungsanlage (CAM-Anlage 60) zur Herstellungsvorbereitung von durch mehrere Bearbeitungsvorgänge in verschiedenen, numerisch gesteuerten Bearbeitungsmaschinen (NC-Maschinen 80, 82, 84) zu bearbeitenden Werkstücken, insbesondere von Werkstücken, die mit einem oder mehreren der Vorgänge Bohren, Bohren mit Vorbohren und Fertigbohren, Bohren mit anschliessendem Reiben, Schleifen, Fräsen, Drahterodieren, Senkerodieren, mechanischem Sägen, Bearbeitung mit Wasserstrahl, Bearbeitung mit Laserstrahlen und aufbauenden Techniken bearbeitet werden sollen,
wobei die CAM-Anlage (60) so eingerichtet sind, dass mit Hilfe einer Schnittstelle (70), vorzugsweise mit einer systemeigenen Schnittstelle der CAD-Anlage (50), die Konstruktionsdaten, insbesondere Lageangaben, Massangaben, Toleranzdaten und Materialdaten, von einer CAD-Anlage (50) an die CAM Anlage (60) weitergegeben werden können,
wobei die CAM-Anlage (60) so eingerichtet ist, dass mit Hilfe der Konstruktionsdaten die Werkzeuge für die Bearbeitungsvorgänge und die Daten für die einzelnen numerisch gesteuerten Bearbeitungsmaschinen (80, 82, 84) festgelegt werden können,
**gekennzeichnet durch**
zumindest eine, mit der CAM-Anlage (60) in Verbindung stehenden Datenbank (65), in der Daten und/oder Algorithmen zugreifbar gespeichert sind, mit deren Hilfe aus den genannten Konstruktionsdaten die Angaben zur Auswahl der Werkzeuge für die Bearbeitungsvorgänge und die Daten für die einzelnen numerisch gesteuerten Bearbeitungsmaschinen (80, 82, 84) festgelegt werden können.

14. Computerunterstützte Fertigungsanlage (CAM-Anlage 60) nach Anspruch 13, **gekennzeichnet durch** eine mit der CAM-Anlage (60) in Verbindung stehenden Vorrangdatenbank (67, 69), wobei die CAM-Anlage (60) so eingerichtet ist, dass sie in dem Fall, dass eine bestimmte Bearbeitungsart für einen Bearbeitungsvorgang des Werkstückes möglich ist, diese Bearbeitungsart festlegt, für den Fall aber, dass mehr als eine Bearbeitungsart für einen Bearbeitungsvorgang des Werkstückes möglich ist, eine Entscheidung über die ausgewählte Bearbeitungsart mit Hilfe der Daten der Vorrangdatenbank (67, 69) vornimmt.

15. Computerunterstützte Fertigungsanlage (CAM-Anlage 60) nach Anspruch 14, **dadurch gekennzeichnet, dass** die Vorrangdatenbank (67) so eingerichtet ist, dass sie die Auswahl für jedes Konstruktionsmerkmal individuell treffen kann.

16. Computerunterstützte Fertigungsanlage (CAM-Anlage 60) nach Anspruch 14, **dadurch gekennzeichnet, dass** die Vorrangdatenbank (69) so eingerichtet ist, dass sie die Auswahl in Abhängigkeit von möglichen Bearbeitungsarten für mehrere Konstruktionsmerkmale treffen kann.

17. Computerunterstützte Fertigungsanlage (CAM-Anlage 60) nach einem der Ansprüche 14 bis 16, **dadurch gekennzeichnet, dass** die Angaben zur Auswahl der Werkzeuge für die Bearbeitungsvorgänge und die Daten für die einzelnen numerisch gesteuerten Bearbeitungsmaschinen (80, 82) den Konstruktionsdaten hinzugefügt werden können und über die genannte Schnittstelle oder eine weitere Schnittstelle (70) zwischen einer CAD-Anlage (50) und der CAM-Anlage (60) der CAD-Anlage (50) zur Verfügung gestellt werden können.

18. Computerunterstützte Fertigungsanlage (CAM-Anlage 60) nach Anspruch 17, **dadurch gekennzeichnet, dass** die CAM-Anlage so eingerichtet ist, dass sie im Fall, dass eine bestimmte Bearbeitungsart für einen Bearbeitungsvorgang des Werkstückes bereits den Konstruktionsdaten hinzugefügt worden ist, diese Daten ohne Hilfe der Daten der Vorrangdatenbank (67) verwendet werden.

19. Computerunterstützte Konstruktionsanlage (CAD-Anlage 50) zur Konstruktion von durch mehrere Bearbeitungsvorgänge in verschiedenen, numerisch gesteuerten Bearbeitungsmaschinen (NC-Maschinen 80, 82, 84) zu bearbeitenden Werkstücken, insbesondere von Werkstücken, die mit einem oder mehreren der Vorgänge Bohren, Bohren mit Vorbohren und Fertigbohren, Bohren mit anschliessendem Reiben, Schleifen, Fräsen, Drahterodieren, Senkerodieren, mechanischem Sägen, Bearbeitung mit Wasserstrahl, Bearbeitung mit Laserstrahlen und aufbauenden Techniken bearbeitet werden sollen,
wobei die CAD-Anlage (50) so eingerichtet ist, dass Konstruktionsdaten erstellt oder bereits erstellte Konstruktionsdaten verändert werden können,
wobei die CAD-Anlage (50) so eingerichtet sind, dass mit Hilfe einer Schnittstelle, vorzugsweise mit einer systemeigenen Schnittstelle der CAD-Anlage (50), die Konstruktionsdaten, insbesondere Lageangaben, Massangaben, Toleranzdaten und Materialdaten, von der CAD-Anlage (50) an eine Computerunterstützte Fertigungsanlage (CAM-Anlage 60) weitergegeben werden können,
**dadurch gekennzeichnet, dass**
die Angaben zur Auswahl der Werkzeuge für die Bearbeitungsvorgänge und die Daten für die einzelnen numerisch gesteuerten Bearbeitungsmaschinen aus einer, mit der CAM-Anlage (60) in Verbindung stehenden Datenbank (65), in der Daten und/oder Algorithmen zugreifbar gespeichert sind, mit deren Hilfe aus den genannten Konstruktionsdaten die Angaben zur Auswahl der Werkzeuge für die Bearbeitungsvorgänge und die Daten für die einzelnen numerisch gesteuerten Bearbeitungsmaschinen festgelegt werden können, den Konstruktionsdaten hinzugefügt werden können und über eine Schnittstelle zwischen der CAD-Anlage (50) und der CAM-Anlage (60) der CAD-Anlage (50) zur Verfügung gestellt werden können.
